# EUROPEAN PATENT APPLICATION

(11) **EP 4 836 547 A1**
(43) Date of publication of application: **04.11.2026**
(21) Application number: 24910926.5
(22) Date of filing: 19.12.2024
(51) Int. Cl.: H04W 60/06

(54) **REGISTRATION METHOD AND APPARATUS**

(30) Priority: 26.12.2023 CN 202311819635
(71) Applicant: Spreadtrum Communications (Shanghai) Co., Ltd., Shanghai 201203 (CN)
(72) Inventor: LIU, Xing, Shanghai 201203 (CN)
(74) Representative: Casalonga
(86) International application number: PCT/CN2024/140622
(87) International publication number: WO 2025/139997

(57) **Abstract**

Embodiments of the present application relate to technical fields such as communications and terminal registration, and provide a registration method and apparatus. The method comprises: sending a non-access stratum (NAS) message to a first network device, wherein a terminal is awaiting registration to a terrestrial network; and receiving first link release information sent by the first network device, the first link release information being used for instructing the terminal to suspend a registration process. The present application is used for preventing interruption of the registration process of the terminal.

## Description

The present application claims priority to a CN Patent Application No. 202311819635.X, entitled as "REGISTRATION METHOD AND APPARATUS", filed with the China National Intellectual Property Administration on December 26, 2023, the entirety of which is incorporated herein by reference.

### TECHNICAL FIELD

The embodiments of the present application relate to technical fields such as communication and terminal registration, particularly to a registration method and an apparatus.

### BACKGROUND

At present, satellites may be used in a store and forward mode, where the satellites forward signaling and data between terminals and terrestrial networks.

In a registration procedure of a terminal, in the store and forward mode, when there is a link between a current serving satellite of the terminal and a terrestrial network, the registration procedure can be completed by the current serving satellite. When there is no link between the current serving satellite of the terminal and the terrestrial network, the registration procedure of the terminal is interrupted.

### SUMMARY

An embodiment of the present application provides a registration method and an apparatus, preventing interruption of a registration procedure of a terminal.

In a first aspect, an embodiment of the present application provides a registration method, the method applied at a terminal and comprising:
sending a non-access stratum NAS message to a first network device, the terminal to be registered with a terrestrial network;
receiving first link release information sent by the first network device, the first link release information for indicating to the terminal to suspend a registration procedure.

In one implementation, the first link release information includes a timing duration of a first timer and/or a timing duration of a second timer.

In one implementation, the method further comprises:
starting the first timer and/or the second timer.

In one implementation, the method further comprises:
sending a request message to a second network device when the first timer expires and the second timer is running, the request message for obtaining an NAS response message corresponding to the NAS message.

In one implementation, the method further comprises:
receiving the NAS response message sent by the second network device and stopping the second timer.

In one implementation, the receiving the NAS response message sent by the second network device comprises:
receiving the NAS response message sent by the second network device when the NAS response message is stored in the second network device.

In one implementation, the method further comprises:
receiving second link release information sent by the second network device, the second link release information for indicating to the terminal to suspend the registration procedure.

In one implementation, the receiving second link release information sent by the second network device comprises:
receiving the second link release information sent by the second network device when the NAS response message is not stored in the second network device.

In one implementation, the second link release information includes a new timing duration of the first timer and/or first indication information.

The first indication information is configured to indicate that the NAS response message is not stored.

In one implementation, the method further comprises:
starting or restarting the first timer.

In one implementation, it is determined that the registration procedure has failed when the second timer expires.

In one implementation, the request message includes a permanent identifier of the terminal and/or second indication information;
the second indication information is configured to indicate to obtain the NAS response message.

In a second aspect, an embodiment of the present application provides a registration method, the method applied at a first network device and comprising:
receiving an NAS message sent by a terminal;
sending first link release information to the terminal, the first link release information for indicating to the terminal to suspend a registration procedure.

In one implementation, the first link release information includes a timing duration of a first timer and/or a timing duration of a second timer.

In a third aspect, an embodiment of the present application provides a registration method, the method applied at a second network device and comprising:
receiving a request message sent by a terminal, the request message for obtaining an NAS response message corresponding to an NAS message.

In one implementation, the method further comprises:
sending the NAS response message to the terminal when the NAS response message is stored in the second network device.

In one implementation, the method further comprises:
sending second link release information to the terminal when the NAS response message is not stored in the second network device, the second link release information for indicating to the terminal to suspend a registration procedure.

In one implementation, the second link release information includes a new timing duration of the first timer and/or first indication information.

The first indication information is configured to indicate that the NAS response message is not stored.

In one implementation, the request message includes a permanent identifier of the terminal and/or second indication information;
the second indication information is configured to indicate to obtain the NAS response message.

In a fourth aspect, an embodiment of the present application provides a registration apparatus, the apparatus applied at a terminal and comprising:
a first sending module for sending a non-access stratum NAS message to a first network device, the terminal to be registered with a terrestrial network;
a first receiving module for receiving first link release information sent by the first network device, the first link release information being configured to indicate to the terminal to suspend a registration procedure.

In one implementation, the first link release information includes a timing duration of a first timer and/or a timing duration of a second timer.

In one implementation, the apparatus further comprises:
a control module for starting the first timer and/or the second timer.

In one implementation, the first sending module is also configured to send a request message to a second network device when the first timer expires and the second timer is running, the request message for obtaining an NAS response message corresponding to the NAS message.

In one implementation, the first receiving module is also configured to receive the NAS response message sent by the second network device.

The control module is also configured to stop the second timer.

In one implementation, the first receiving module is also specifically configured to receive the NAS response message sent by the second network device when the NAS response message is stored in the second network device.

In one implementation, the first receiving module is also configured to receive second link release information sent by the second network device, the second link release information for indicating to the terminal to suspend the registration procedure.

In one implementation, the first receiving module is also specifically configured to receive the second link release information sent by the second network device when the NAS response message is not stored in the second network device.

In one implementation, the second link release information includes a new timing duration of the first timer and/or first indication information.

The first indication information is configured to indicate that the NAS response message is not stored.

In one implementation, the control module is also configured to start or restart the first timer.

In one implementation, it is determined that the registration procedure has failed when the second timer expires.

In one implementation, the request message includes a permanent identifier of the terminal and/or second indication information;
the second indication information is configured to indicate to obtain the NAS response message.

In a fifth aspect, an embodiment of the present application provides a registration apparatus, the apparatus applied at a first network device and comprising:
a second receiving module for receiving an NAS message sent by a terminal;
a second sending module for sending first link release information to the terminal, the first link release information for indicating to the terminal to suspend a registration procedure.

In one implementation, the first link release information includes a timing duration of a first timer and/or a timing duration of a second timer.

In a sixth aspect, an embodiment of the present application provides a registration apparatus, the apparatus applied at a second network device and comprising:
a third receiving module for receiving a request message sent by a terminal, the request message for obtaining an NAS response message corresponding to an NAS message.

In one implementation, the apparatus further comprises:
a third sending module for sending the NAS response message to the terminal when the NAS response message is stored in the second network device.

In one implementation, the apparatus further comprises:
a third sending module for sending second link release information to the terminal when the NAS response message is not stored in the second network device, the second link release information for indicating to the terminal to suspend a registration procedure.

In one implementation, the second link release information includes a new timing duration of the first timer and/or first indication information.

The first indication information is configured to indicate that the NAS response message is not stored.

In one implementation, the request message includes a permanent identifier of the terminal and/or second indication information;
the second indication information is configured to indicate to obtain the NAS response message.

In a seventh aspect, an embodiment of the present application provides a registration apparatus, comprising: a memory and a processor;
the memory storing computer-readable instructions;
the processor executing the computer-readable instructions stored in the memory to cause the processor to perform any of the methods described in the first aspect.

In an eighth aspect, an embodiment of the present application provides a registration apparatus, comprising: a memory and a processor;
the memory storing computer-readable instructions;
the processor executing the computer-readable instructions stored in the memory to cause the processor to perform any of the methods described in the second aspect.

In a ninth aspect, an embodiment of the present application provides a registration apparatus, comprising: a memory and a processor;
the memory storing computer-readable instructions;
the processor executing the computer-readable instructions stored in the memory to cause the processor to perform any of the methods described in the third aspect.

In a tenth aspect, an embodiment of the present application provides a computer-readable storage medium, which stores computer-readable instructions. The computer-readable instructions, when executed by a processor, are configured to implement any of the methods in the first aspect, or any of the methods in the second aspect, or any of the methods in the third aspect.

In an eleventh aspect, an embodiment of the present application provides a computer program product comprising a computer program that, when executed by a processor, implements any of the methods of the first aspect, or the second aspect, or the third aspect.

In a twelfth aspect, an embodiment of the present application provides a chip on which a computer program is stored. The computer program, when executed by the chip, implements any of the methods in the first aspect, or any of the methods in the second aspect, or any of the methods in the third aspect.

In a thirteenth aspect, an embodiment of the present application provides a chip module on which a computer program is stored. The computer program, when executed by the chip module, implements any of the methods in the first aspect, or any of the methods in the second aspect, or any of the methods in the third aspect.

An embodiment of the present application provides a registration method and an apparatus. The method comprises: sending a non-access stratum NAS message to a first network device, a terminal to be registered with a terrestrial network; receiving first link release information sent by the first network device, which indicates to the terminal to suspend a registration procedure. In the above method, in absence of a link between the first network device and the terrestrial network, the terminal may also receive the first link release information sent by the first network device and suspend the registration procedure, preventing interruption of the registration procedure of the terminal.

### BRIEF DESCRIPTION OF THE DRAWINGS

For illustrating the technical solutions in the present application more clearly, the drawings for describing the embodiments will be introduced briefly below. Apparently, the drawings described below are only some embodiments of the present application. For a person of ordinary skill in the art, other drawings may be obtained according to the drawings without creative efforts.
FIG. 1 is a first schematic architecture diagram of satellite communication provided by an embodiment of the present application;
FIG. 2 is a second schematic architecture diagram of satellite communication provided by an embodiment of the present application;
FIG. 3 is a first schematic flow diagram of a registration method provided by an embodiment of the present application;
FIG. 4 is a second schematic flow diagram of a registration method provided by an embodiment of the present application;
FIG. 5 is a third schematic flow diagram of a registration method provided by an embodiment of the present application;
FIG. 6 is a first schematic structure diagram of a registration apparatus provided by an embodiment of the present application;
FIG. 7 is a second schematic structure diagram of a registration apparatus provided by an embodiment of the present application;
FIG. 8 is a third schematic structure diagram of a registration apparatus provided by an embodiment of the present application;
FIG. 9 is a fourth schematic structure diagram of a registration apparatus provided by an embodiment of the present application;
FIG. 10 is a fifth schematic structure diagram of a registration apparatus provided by an embodiment of the present application;
FIG. 11 is a sixth schematic structure diagram of a registration apparatus provided by an embodiment of the present application.

Through the above drawings, the specific embodiments of the present application have been shown, and more detailed descriptions will be provided in the following text. These drawings and textual descriptions are not intended to limit the scope of the present application in any way, but rather to illustrate the concept of the present application for those skilled in the art by referring to specific embodiments.

### DETAILED DESCRIPTION

Here, exemplary embodiments will be described in detail, with examples shown in the accompanying drawings. When referring to the accompanying drawings, unless otherwise indicated, the same numbers in different drawings represent the same or similar elements. The implementations described in the following exemplary embodiments do not represent all embodiments consistent with the present application. On the contrary, they are only examples of apparatuses and methods consistent with some aspects of the present application as described in the accompanying claims.

It should be noted that in this article, the terms "include", "contain" or any other variation thereof are intended to encompass non exclusive inclusion, such that a process, a method, an article, or an apparatus that includes a series of elements not only includes those elements, but also includes other elements not explicitly listed, or also includes elements inherent to such process, method, article, or apparatus. Without further limitations, the element limited by the statement "including a..." does not exclude the existence of other identical elements in the process, method, article, or apparatus that includes that element.

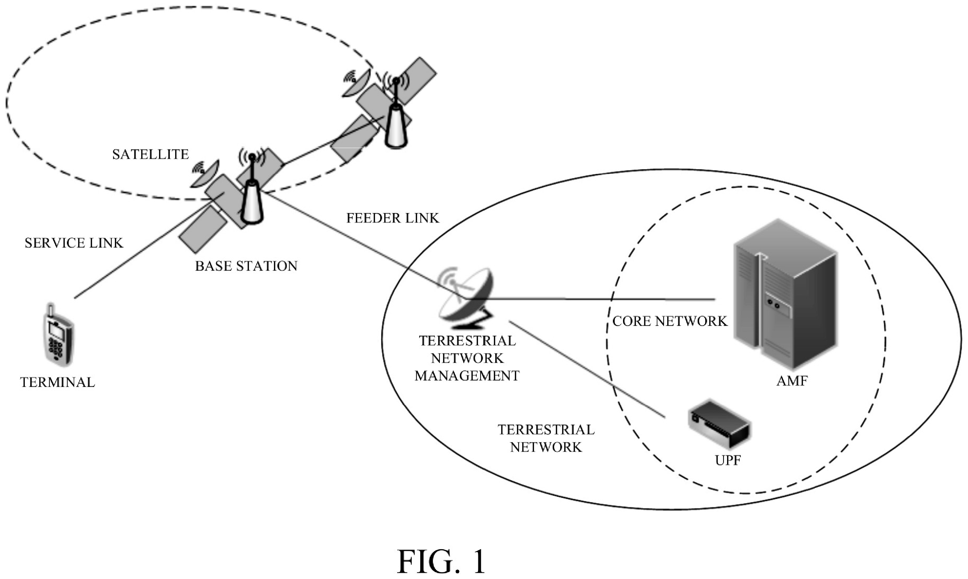

Firstly, satellite communication is illustrated in conjunction with FIG. 1.

FIG. 1 is a first schematic architecture diagram of the satellite communication provided by an embodiment of the present application. As shown in FIG. 1, the architecture includes a terminal, satellites, and a terrestrial network.

Base stations are located on the satellites. The terrestrial network includes: terrestrial network management and a core network. Here, the core network includes network elements such as an Access and Mobility Management Function and a User Plane Function.

The link between a terminal and a satellite is called a service link. The link between a satellite and a terrestrial network is called a feeder link.

In an early stage of satellite network deployment, the number of satellites may be a few, and the number of terrestrial networks may also be a few, which may lead to a satellite failing to connect with a terrestrial network when it is connected to a terminal, or the satellite failing to connect to the terminal when it is connected to the terrestrial network, resulting in the link between the terminal and the terrestrial network and thus data transmission between the terminal and the terrestrial network being disconnected from time to time.

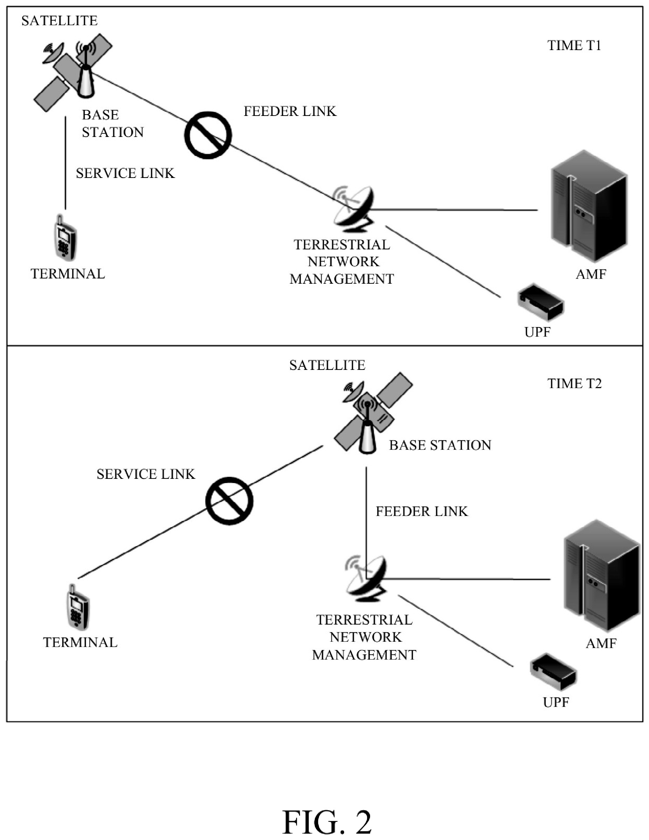

FIG. 2 is a second schematic architecture diagram of the satellite communication provided by an embodiment of the present application. As shown in FIG. 2, the architecture includes a terminal, a satellite, and a terrestrial network.

For example, at time T1, the satellite is linked to the terminal but cannot link to the terrestrial network. For example, at time T2, the satellite is linked to the terrestrial network but cannot link to the terminal. When there is no link between a current serving satellite of the terminal and the terrestrial network, a registration procedure of the terminal is interrupted.

In order to prevent interruption of the registration procedure of the terminal when there is no link between the current serving satellite of the terminal and the terrestrial network, the present application provides a registration method and an apparatus. In the method, after the terminal sends a non-access stratum NAS message to the current serving satellite, the current serving satellite sends first link release information to the terminal when there is no NAS response message in the current serving satellite, preventing interruption of the registration procedure of the terminal.

Below is a detailed explanation of the technical solution of the present application and how the technical solution of the present application solves the above technical problems through specific embodiments. The following specific embodiments can be combined with each other, and the same or similar concepts or processes may not be repeated in some embodiments. In the following, embodiments of the present application will be described in combination with the accompanying drawings.

The technical solution of the present application is applicable to a fifth generation (5G) communication system, a fourth generation (4G) communication system, a third generation (3G) communication system, and various future communication systems, such as a sixth generation (6G) communication system, a seventh generation (7G) communication system, etc. The embodiments of the present application are not limited in this aspect.

The technical solution of the present application is also applicable to different network architectures, including but not limited to a Non-Terrestrial Network (NTN) architecture, a relay network architecture, and a dual connectivity architecture.

The devices in the embodiments of the present application include network devices and terminal devices.

The network devices in the embodiments of the present application include a base station and a base station controller of an access network, and may also include a terminal.

The base station (BS) in the embodiments of the present application, also known as a base station device, is an apparatus deployed in a radio access network (RAN) to provide wireless communication functions. For example, the device providing functions of a base station in a second generation 2G network includes a Base Transceiver Station (BTS), the device providing functions of a base station in a third generation 3G network includes a NodeB, the device providing functions of a base station in a fourth generation 4G network includes an evolved NodeB (eNB), the device providing functions of a base station in a Wireless Local Area Network (WLAN) is an Access Point (AP), the device providing functions of a base station in 5G New Radio (NR) is a gNB and a next generation evolved NodeB (ng-eNB), where the gNB communicates with a terminal using NR technology, and the ng-eNB communicates with a terminal using Evolved Universal Terrestrial Radio Access (E-UTRA) technology, and both the gNB and the ng-eNB may be connected to a 5G core network. The base station in the embodiments of the present application also encompasses a device providing functions of a base station in future new communication systems, etc.

The base station controller in the embodiments of the present application, also known as a base station controller device, is an apparatus for managing a base station, such as a Base Station Controller (BSC) in 2G networks, a Radio Network Controller (RNC) in 3G networks, and may also refer to an apparatus for controlling and managing a base station in future communication systems.

The terminal in the embodiments of the present application, also known as a terminal device, may refer to various forms of a User Equipment (UE), an access terminal, a subscriber unit, a subscriber station, a mobile platform, a Mobile Station (MS), a remote station, a remote terminal, a mobile device, a user terminal, a wireless communication device, a user agent, or a user apparatus. The terminal device may also be a cellular phone, a cordless phone, a Session Initiation Protocol (SIP) phone, a Wireless Local Loop (WLL) station, a Personal Digital Assistant (PDA), a handheld device with wireless communication functions, a computing device, or another processing device connected to a wireless modem, an in-vehicle device, a wearable device, a terminal device in a future 5G network, or a terminal device in a future evolved Public Land Mobile Network (PLMN), etc., and this is not limited in the embodiments of the present application.

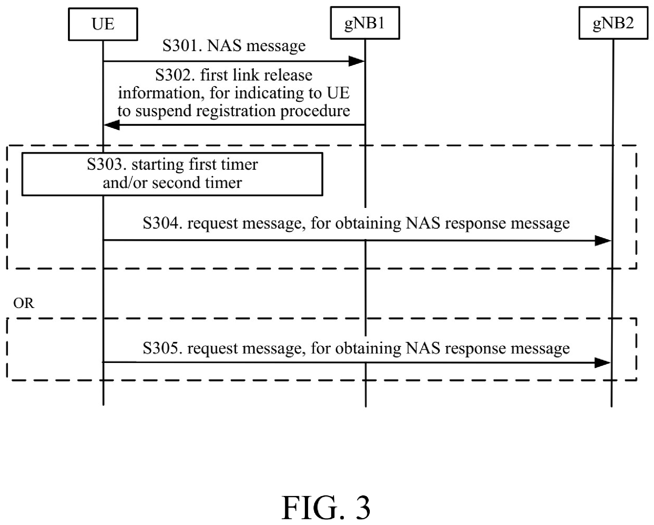

FIG. 3 is a first schematic flow diagram of a registration method provided by an embodiment of the present application. As shown in FIG. 3, the method includes the following steps.

S301. A terminal (UE) sends an NAS message to a first network device (gNB1).

The terminal is to be registered with a terrestrial network.

There is no link between the first network device and the terrestrial network.

The NAS message is configured to request registration to the terrestrial network. The NAS message can be, for example, a registration request message or an attach request message.

The terminal may register with the terrestrial network based on an NAS response message corresponding to the NAS message. The NAS response message can be, for example, a registration response message or an attach response message.

S302. The first network device sends first link release information to the terminal, the first link release information is configured to indicate to the terminal to suspend a registration procedure.

The first link release information is configured to release the link between the first network device and the terminal, causing the terminal to enter an idle state.

The first network device stores the NAS message after receiving the NAS message.

Optionally, the first link release information includes a timing duration of a first timer and/or a timing duration of a second timer. Optionally, the timing duration of the first timer is an interval before next earliest scheduling of the terminal. Optionally, the timing duration of the second timer is an interval before next latest scheduling of the terminal.

The terminal suspending the registration procedure refers to the registration procedure not being interrupted (stopped), which can be considered as the registration procedure being paused (suspended).

In the event of interruption of the registration procedure, the registration procedure can only be restarted.

In the event of suspension of the registration procedure, the registration procedure can still be resumed without restart.

Optionally, when the registration procedure is paused, the timers related to the registration procedure (the timers of the registration procedure itself, which is a prior art) can continue to run, or they can be paused until the procedure is resumed and then continue to run.

S303. The terminal starts the first timer and/or the second timer.

Optionally, the terminal can set the timing duration of the first timer to the timing duration of the first timer in the first link release information, and start the first timer; and/or, the terminal sets the timing duration of the second timer to the timing duration of the second timer in the first link release information, and starts the second timer.

Optionally, the terminal can also set the timing duration of the first timer to a value specified in a protocol, and/or set the timing duration of the second timer to a value specified in a protocol.

S304. The terminal sends a request message to a second network device (gNB2), and the request message is configured to obtain the NAS response message corresponding to the NAS message.

Optionally, the terminal may send the request message to the second network device (gNB2) when the first timer expires and the second timer is running.

The second network device may or may not store the NAS response message.

There may or may not be a link between the second network device and the terrestrial network.

In one implementation, the terminal may perform S305 instead of S303 and S304 after performing S302.

S305. The terminal sends a request message to the second network device, and the request message is configured to obtain the NAS response message corresponding to the NAS message.

In the embodiment of the present application, the terminal sends the NAS message to the first network device, and the terminal is to be registered with the terrestrial network. The terminal receives the first link release information sent by the first network device, which indicates to the terminal to suspend the registration procedure. In the above procedure, in absence of a link between the first network device and the terrestrial network, the terminal may receive the first link release information sent by the first network device and suspend the registration procedure, preventing interruption of the registration procedure of the terminal.

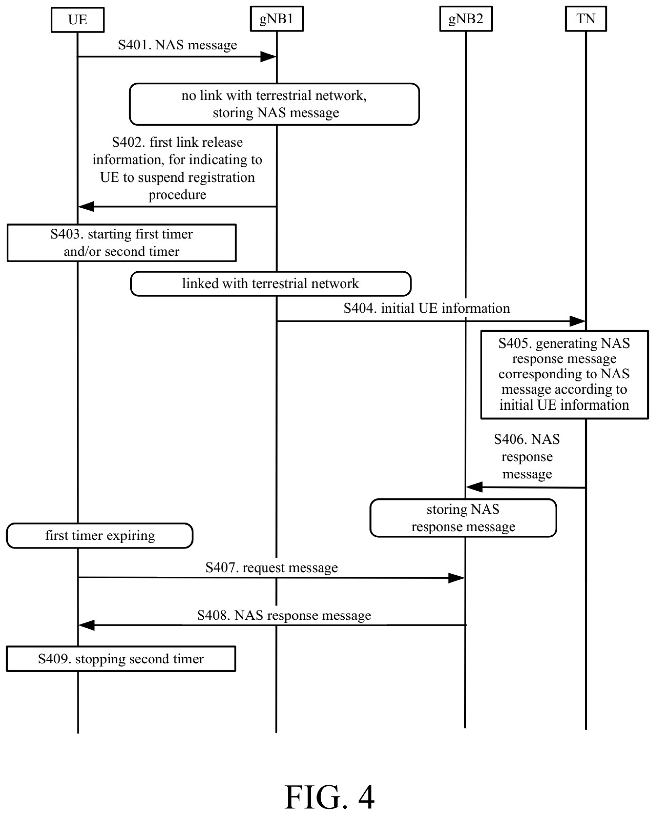

On the basis of the above embodiment, in an example where the second network device does not store the NAS response message and the second network device has no link with the terrestrial network, a registration method provided by an embodiment of the present application will be illustrated below with reference to FIG. 4.

FIG. 4 is a second schematic flow diagram of a registration method provided by an embodiment of the present application. As shown in FIG. 4, the method includes the following steps.

S401. A terminal (UE) sends an NAS message to a first network device (gNB1).

Optionally, an access procedure between the terminal and the first network device can be a Random Access Channel (RACH) procedure or an access procedure conducted in a RACH-less way.

For example, when the access procedure is an RACH procedure, generally speaking, the RACH procedure includes a first message (msg1) to a fourth message (msg4). The terminal may send an NAS message to a network device after msg4 of the RACH, or carry the NAS message in a third message (msg3) and send the third message to the first network device.

If the NAS message is carried in msg3, it means that the terminal sending the NAS message when accessing.

S402. The first network device stores the NAS message, and sends first link release information to the terminal, and the first link release information is configured to indicate to the terminal to suspend a registration procedure.

Optionally, when there is no link between the first network device and the terrestrial network, S402 is performed.

In particular, S402 is performed in a same way as that of S302, and S402 will not be repeated here.

S403. The terminal starts a first timer and/or a second timer.

In particular, S403 is performed in a same as that of S303, and S403 will not be repeated here.

S404. The first network device sends an initial UE message to the terrestrial network before the first timer expires.

Optionally, before the first timer expires, the first network device sends the initial UE message to the terrestrial network when there is a link between the first network device and the terrestrial network.

S405. The terrestrial network generates an NAS response message corresponding to the NAS message based on the initial UE message.

S406. The terrestrial network sends the NAS response message to a second network device.

Optionally, the terrestrial network (TN) sends the NAS response message to the second network device (gNB2) when there is a link between the terrestrial network and the second network device.

The second network device stores the NAS response message.

S407. The terminal sends a request message to the second network device, and the request message is configured to obtain the NAS response message corresponding to the NAS message.

In the present application, the request message includes a permanent identifier of the terminal and/or second indication information.

The second indication information is configured to indicate to obtain the NAS response message.

Optionally, when a valid temporary identifier has not been saved at the terminal after the first timer expires, the terminal initiates an access procedure with the second network device (i.e., starts to attempt to access the second network device) and performs S407.

The second network device can be a network device that provides services to terminals.

When a valid temporary identifier has been saved at the terminal after the first timer expires, a paging procedure for the terminal can be performed without the need for the access procedure between the terminal and the second network device.

The temporary identifier can be, for example, 5G S-Temporary Mobile Subscription Identifier (5G-S-TSMI).

S408. The second network device sends the NAS response message to the terminal.

Optionally, the second network device may query the NAS response messages stored by the second network device based on the permanent identifier of the terminal for the NAS response message corresponding to the terminal, and then send the NAS response message to the terminal based on the second indication information.

S409. The terminal stops the second timer and completes the registration successfully.

It should be noted that when any step of S405 to S408 is performed, the terminal determines that the registration procedure has failed when the second timer expires.

The terminal may restart the NAS procedure after the registration procedure fails. Here, the NAS procedure includes an initial registration procedure and/or an attach procedure.

In the registration method provided by the embodiment of FIG. 4, the terminal first attempts to access the terrestrial network by the first network device. In absence of a link between the first network device and the terrestrial network, the first network device may send first link release information to the terminal, and the terminal starts the first timer and/or the second timer based on the first link release information. The terminal sends a request message to the second network device after the first timer expires, for obtaining the NAS response message corresponding to the NAS message. This can prevent interruption of the registration procedure of the terminal and enable the terminal to attempt to access the terrestrial network by the second network device, thereby preventing interruption of the registration procedure of the terminal.

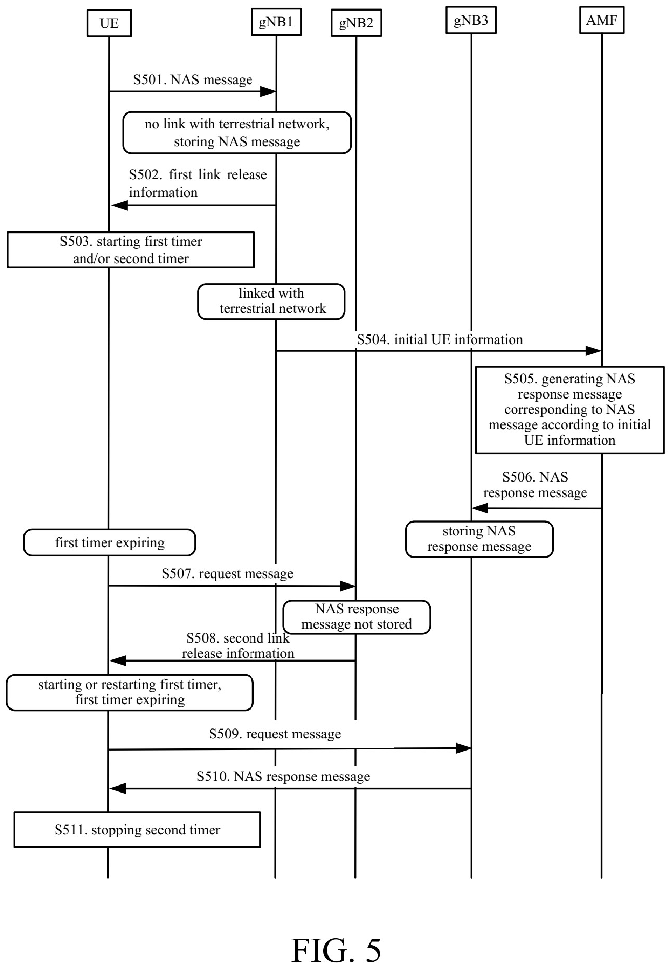

On the basis of the above embodiment, in an example where the second network device does not store an NAS response message, a registration method provided by an embodiment of the present application will be illustrated below with reference to FIG. 5.

FIG. 5 is a third schematic flow diagram of a registration method provided by an embodiment of the present application. As shown in FIG. 5, the method includes the following steps.

S501. A terminal sends an NAS message to a first network device.

S502. The first network device stores the NAS message and sends first link release information to the terminal.

S503. The terminal starts a first timer and/or a second timer.

S504. The first network device sends an initial UE message to a terrestrial network before the first timer expires.

In particular, S501 to S504 are performed in a correspondingly same way as that of S401 to S404, and S501 to S504 will not be repeated here.

S505. The terrestrial network (TN) generates an NAS response message corresponding to the NAS message based on the initial UE message.

S506. The terrestrial network sends the NAS response message to a third network device (gNB3).

Optionally, S506 is performed when there is a link between the third network device and the terrestrial network.

The third network device stores the NAS response message.

S507. The terminal sends a request message to the second network device after the first timer expires, and the request message is configured to obtain the NAS response message corresponding to the NAS message.

Optionally, when a valid temporary identifier has not been saved at the terminal after the first timer expires, the terminal initiates an access procedure with the second network device to attempt to access the second network device and therefore performs S507.

The second network device can be a network device that provides services to terminals.

S508. The second network device sends second link release information to the terminal, and the second link release information is configured to indicate to the terminal to suspend the registration procedure.

Optionally, S508 is performed when the NAS response message is not stored in the second network device.

There can be a link or no link between the second network device and the terrestrial network.

The second link release information indicates to the terminal to enter an idle state.

Optionally, the second link release information includes a new timing duration of the first timer and/or first indication information. The first indication information is configured to indicate that the NAS response message is not stored.

S509. The terminal sends a request message to the next network device (e.g., the third network device), and the request message is configured to obtain the NAS response message corresponding to the NAS message.

Optionally, S509 is performed after the first timer is started or restarted and the first timer expires .

Optionally, in case where the second link release information includes the new timing duration of the first timer, the terminal sets the timing duration of the first timer to the new timing duration of the first timer in the second link release information, and starts the first timer. S509 is performed after the first timer expires again.

Optionally, in case where the second link release information does not include the new timing duration of the first timer, the terminal once again sets the timing duration of the first timer to the new timing duration of the first timer in the first link release information, and restarts the first timer. S509 is performed after the first timer expires.

In particular, S509 is performed in the same way as that of S507, and will not be repeated here.

In S509, if the next network device is not the third network device but a fourth network device (gNB4), a process similar to S509 is repeated until the third network device is the next network device to obtain the NAS response message.

S510. The third network device sends the NAS response message to the terminal.

Optionally, S510 is performed when the NAS response message is stored in the third network device.

S511. The terminal stops the second timer and completes the registration successfully.

It should be noted that when any step of S505 to S511 is performed, the terminal determines that the registration procedure has failed when the second timer expires.

The terminal may restart the NAS procedure after the registration procedure fails. Here, the NAS procedure includes an initial registration procedure and/or an attach procedure.

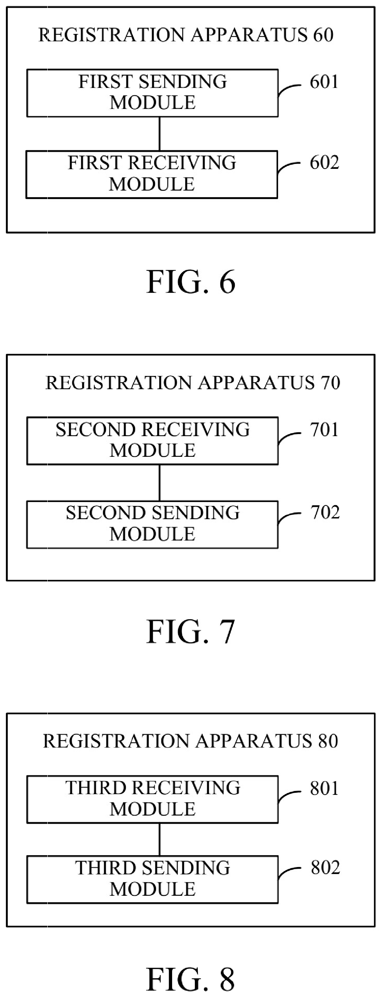

FIG. 6 is a first schematic structure diagram of a registration apparatus provided by an embodiment of the present application. The registration apparatus 60 is provided at a terminal, as shown in FIG. 6, and includes the following modules.

A first sending module 601 is configured to send a non-access stratum NAS message to a first network device, the terminal to be registered with a terrestrial network.

A first receiving module 602 is configured to receive first link release information sent by the first network device, the first link release information being configured to indicate to the terminal to suspend a registration procedure.

The registration apparatus 60 provided in the embodiment of the present application can perform the method steps performed by the terminal in the technical solution shown in the above method embodiment. The implementation principle and beneficial effects are similar, which will not be repeated here.

In one implementation, the first link release information includes a timing duration of a first timer and/or a timing duration of a second timer.

In one implementation, the registration apparatus 60 further includes:
a control module, configured to start the first timer and/or the second timer.

In one implementation, the first sending module 601 is also configured to:
send a request message to a second network device when the first timer expires and the second timer is running, the request message being configured to obtain an NAS response message corresponding to the NAS message.

In one implementation, the first receiving module 602 is also configured to receive the NAS response message sent by the second network device.

The control module is also configured to stop the second timer.

In one implementation, the first receiving module 602 is also specifically configured to:
receive the NAS response message sent by the second network device when the NAS response message is stored in the second network device.

In one implementation, the first receiving module 602 is also configured to:
receive second link release information sent by the second network device, the second link release information for indicating to the terminal to suspend the registration procedure.

In one implementation, the first receiving module 602 is also specifically configured to:
receive the second link release information sent by the second network device when the NAS response message is not stored in the second network device.

In one implementation, the second link release information includes a new timing duration of the first timer and/or first indication information.

The first indication information is configured to indicate that the NAS response message is not stored.

In one implementation, the control module is also configured to:
start or restart the first timer.

In one implementation, it is determined that the registration procedure has failed when the second timer expires.

In one implementation, the request message includes a permanent identifier of the terminal and/or second indication information.

The second indication information is configured to indicate to obtain the NAS response message.

The registration apparatus 60 provided in the embodiment of the present application can perform the method steps performed by the terminal in the technical solution shown in the above method embodiment. The implementation principle and beneficial effects are similar, which will not be repeated here.

FIG. 7 is a second schematic structure diagram of a registration apparatus provided by an embodiment of the present application. The registration apparatus 70 is provided at a first network device, as shown in FIG. 7, and includes the following modules.

A second receiving module 701 is configured to receive an NAS message sent by a terminal.

A second sending module 702 is configured to send first link release information to the terminal for indicating to the terminal to suspend a registration procedure.

The registration apparatus 70 provided in the embodiment of the present application can perform the method steps performed by the first network device in the technical solution shown in the above method embodiment. The implementation principle and beneficial effects are similar, which will not be repeated here.

In one implementation, the first link release information includes a timing duration of a first timer and/or a timing duration of a second timer.

FIG. 8 is a third schematic structure diagram of a registration apparatus provided by an embodiment of the present application. The registration apparatus 80 is provided at a second network device, as shown in FIG. 8, and includes the following modules.

A third receiving module 801 is configured to receive a request message sent by a terminal, the request message for obtaining an NAS response message corresponding to an NAS message.

The registration apparatus 80 provided in the embodiment of the present application can perform the method steps performed by the second network device in the technical solution shown in the above method embodiment. The implementation principle and beneficial effects are similar, which will not be repeated here.

In one implementation, the registration apparatus 80 further includes:
a third sending module 802 configured to send the NAS response message to the terminal when the NAS response message is stored in the second network device.

In one implementation, the registration apparatus 80 further includes:
a third sending module 802 configured to send second link release information to the terminal when the NAS response message is not stored in the second network device, the second link release information for indicating to the terminal to suspend a registration procedure.

In one implementation, the second link release information includes a new timing duration of a first timer and/or first indication information.

The first indication information is configured to indicate that the NAS response message is not stored.

In one implementation, the request message includes a permanent identifier of the terminal and/or second indication information.

The second indication information is configured to indicate to obtain the NAS response message.

The registration apparatus 80 provided in the embodiment of the present application can perform the method steps performed by the second network device in the technical solution shown in the above method embodiment. The implementation principle and beneficial effects are similar, which will not be repeated here.

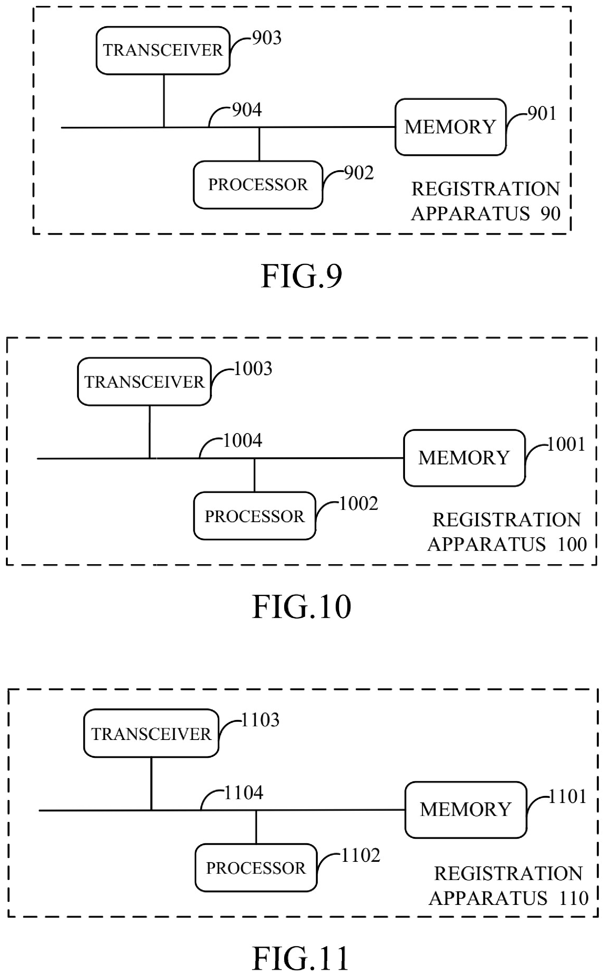

FIG. 9 is a fourth schematic structure diagram of a registration apparatus provided by an embodiment of the present application. As shown in FIG. 9, the registration apparatus 90 may include: a memory 901, a processor 902, and a transceiver 903. The transceiver 903 may include a transmitter and/or a receiver. The transmitter can also be referred to as a sender, a transmitter unit, a sending port, or a sending interface, and the receiver can also be referred to as a receiver unit, a receiving port, or a receiving interface, and the like. For example, the memory 901, the processor 902, and the transceiver 903 are interconnected via a bus 904.

The memory 901 is configured to store program instructions.

The processor 902 is configured to execute the program instructions stored in the memory to implement the method steps performed by the terminal in the above method embodiments.

FIG. 10 is a fifth schematic structure diagram of a registration apparatus provided by an embodiment of the present application. As shown in FIG. 10, the registration apparatus 100 may include: a memory 1001, a processor 1002, and a transceiver 1003. The transceiver 1003 may include a transmitter and/or a receiver. The transmitter can also be referred to as a sender, a transmitter unit, a sending port, or a sending interface, and the receiver can also be referred to as a receiver unit, a receiving port, or a receiving interface, and the like. For example, the memory 1001, the processor 1002, and the transceiver 1003 are interconnected via a bus 1004.

The memory 1001 is configured to store program instructions.

The processor 1002 is configured to execute the program instructions stored in the memory to implement the method steps performed by the first network device in the above method embodiments.

FIG. 11 is a sixth schematic structure diagram of a registration apparatus provided by an embodiment of the present application. As shown in FIG. 11, the registration apparatus 110 may include: a memory 1101, a processor 1102, and a transceiver 1103. The transceiver 1103 may include a transmitter and/or a receiver. The transmitter can also be referred to as a sender, a transmitter unit, a sending port, or a sending interface, and the receiver can also be referred to as a receiver unit, a receiving port, or a receiving interface, and the like. For example, the memory 1101, the processor 1102, and the transceiver 1103 are interconnected via a bus 1104.

The memory 1101 is configured to store program instructions.

The processor 1102 is configured to execute the program instructions stored in the memory to implement the method steps performed by the second network device in the above method embodiments.

All or part of the steps for implementing the above methods can be completed by hardware related to program instructions. The aforementioned program may be stored in a readable memory. When the program is executed, the steps of the above-mentioned method embodiments are performed. The aforementioned memory (or storage medium) includes a read-only memory (ROM), a random access memory (RAM), a flash memory, a hard disk, a solid-state drive, a magnetic tape, a floppy disk, an optical disc, and any combination thereof.

An embodiment of the present application provides a computer-readable storage medium, which stores computer-executable instructions. When the computer-executable instructions are executed by a processor, they implement the methods described in the above method embodiments.

An embodiment of the present application also provides a computer program product, comprising a computer program that, when executed by a processor, can implement the methods shown in the above method embodiments.

An embodiment of the present application provides a chip on which a computer program is stored. The computer program, when executed by the chip, implements any of the methods in the first aspect, or any of the methods in the second aspect, or any of the methods in the third aspect.

An embodiment of the present application provides a chip module on which a computer program is stored. The computer program, when executed by the chip module, implements any of the methods in the first aspect, or any of the methods in the second aspect, or any of the methods in the third aspect.

These computer program instructions can also be stored in a computer-readable memory that can guide a computer or another programmable data processing device to operate in a specific manner, causing the instructions stored in the computer-readable memory to produce a manufactured product including a instruction apparatus that implements the functions specified in one or more flows in a flowchart and/or one or more boxes in a block diagram.

These computer program instructions can also be loaded onto a computer or another programmable data processing device, enabling a series of operational steps to be performed on the computer or another programmable device to generate computer implemented processing. Thus, instructions executed on the computer or the other programmable device provide steps for implementing the functions specified in one or more flows in a flowchart and/or in one or more boxes in a block diagram.

Obviously, those skilled in the art can make various modifications and variations to the embodiments of the present application without departing from the spirit and scope of the present application. In this way, if these modifications and variations of the embodiments of the present application fall within the scope of the claims and equivalent technologies of the present application, then the present application also intends to include these modifications and variations.

In the present application, the term "include" and its variations may refer to nonlimiting including. The term "or" and its variations can refer to "and/or". The terms "first", "second", etc. in the present application are used to distinguish similar objects and do not necessarily need to be used to describe a specific order or sequence. In the present application, "multiple" refers to two or more. The term "and/or" describes a relationship between related objects, indicating that three types of relationships may exist. For example, A and/or B may indicate: A alone, both A and B, or B alone. The character "/" indicates an "or" relation between the two objects before and after the character.

## Claims

1. A registration method, **characterized in that** the method is applied at a terminal and comprises:
sending a non-access stratum NAS message to a first network device, the terminal to be registered with a terrestrial network;
receiving first link release information sent by the first network device, the first link release information for indicating to the terminal to suspend a registration procedure.

2. The method according to claim 1, **characterized in that** the first link release information includes a timing duration of a first timer and/or a timing duration of a second timer.

3. The method according to claim 1 or 2, **characterized in that** the method further comprises:
starting the first timer and/or the second timer.

4. The method according to claim 3, **characterized in that** the method further comprises:
sending a request message to a second network device when the first timer expires and the second timer is running, the request message for obtaining an NAS response message corresponding to the NAS message.

5. The method according to claim 4, **characterized in that** the method further comprises:
receiving the NAS response message sent by the second network device and stopping the second timer.

6. The method according to claim 5, **characterized in that** the receiving the NAS response message sent by the second network device comprises:
receiving the NAS response message sent by the second network device when the NAS response message is stored in the second network device.

7. The method according to claim 4, **characterized in that** the method further comprises:
receiving second link release information sent by the second network device, the second link release information for indicating to the terminal to suspend the registration procedure.

8. The method according to claim 7, **characterized in that** the receiving second link release information sent by the second network device comprises:
receiving the second link release information sent by the second network device when the NAS response message is not stored in the second network device.

9. The method according to claim 7 or 8, **characterized in that** the second link release information includes a new timing duration of the first timer and/or first indication information;
the first indication information for indicating that the NAS response message is not stored.

10. The method according to claim 9, **characterized in that** the method further comprises:
starting or restarting the first timer.

11. The method according to any one of claims 4-10, **characterized in that** determining that the registration procedure has failed when the second timer expires.

12. The method according to any one of claims 4-11, **characterized in that** the request message includes a permanent identifier of the terminal and/or second indication information;
the second indication information for indicating to obtain the NAS response message.

13. A registration method, **characterized in that** the method is applied at a first network device and comprises:
receiving an NAS message sent by a terminal;
sending first link release information to the terminal, the first link release information for indicating to the terminal to suspend a registration procedure.

14. The method according to claim 13, **characterized in that** the first link release information includes a timing duration of a first timer and/or a timing duration of a second timer.

15. A registration method, **characterized in that** the method is applied at a second network device and comprises:
receiving a request message sent by a terminal, the request message for obtaining an NAS response message corresponding to an NAS message.

16. The method according to claim 15, **characterized in that** the method further comprises:
sending the NAS response message to the terminal when the NAS response message is stored in the second network device.

17. The method according to claim 15, **characterized in that** the method further comprises:
sending second link release information to the terminal when the NAS response message is not stored in the second network device, the second link release information for indicating to the terminal to suspend a registration procedure.

18. The method according to claim 17, **characterized in that** the second link release information includes a new timing duration of a first timer and/or first indication information;
the first indication information for indicating that the NAS response message is not stored.

19. The method according to any one of claims 15-18, **characterized in that** the request message includes a permanent identifier of the terminal and/or second indication information;
the second indication information for indicating to obtain the NAS response message.

20. A registration apparatus, **characterized in that** the apparatus is applied at a terminal and comprises:
a first sending module for sending a non-access stratum NAS message to a first network device, the terminal to be registered with a terrestrial network;
a first receiving module for receiving first link release information sent by the first network device, the first link release information for indicating to the terminal to suspend a registration procedure.

21. A registration apparatus, **characterized in that** the apparatus is applied at a first network device and comprises:
a second receiving module for receiving an NAS message sent by a terminal;
a second sending module for sending first link release information to the terminal for indicating to the terminal to suspend a registration procedure.

22. A registration apparatus, **characterized in that** the apparatus is applied at a second network device and comprises:
a third receiving module for receiving a request message sent by a terminal, the request message for obtaining an NAS response message corresponding to an NAS message.

23. A registration apparatus, **characterized in that** the apparatus comprises a memory and a processor;
the memory storing computer-executable instructions;
the processor executing the computer-executable instructions stored in the memory to cause the processor to perform the method according to any one of claims 1-12.

24. A registration apparatus, **characterized in that** the apparatus comprises a memory and a processor;
the memory storing computer-executable instructions;
the processor executing the computer-executable instructions stored in the memory to cause the processor to perform the method according to claim 13 or 14.

25. A registration apparatus, **characterized in that** the apparatus comprises a memory and a processor;
the memory storing computer-executable instructions;
the processor executing the computer-executable instructions stored in the memory to cause the processor to perform the method according to any one of claims 15-19.

26. A computer-readable storage medium, **characterized in that**, the computer-readable storage medium stores computer-readable instructions, the computer-readable instructions, when being executed by a processor, implementing the method according to any one of claims 1-12, claim 13 or 14, or any one of claims 15-19.

27. A computer program product, **characterized in that**, the computer program product comprises a computer program that, when being executed by a computer, implements the method according to any one of claims 1-12, claim 13 or 14, or any one of claims 15-19.
